# EUROPEAN PATENT SPECIFICATION

(11) **EP 3 234 365 B1**
(45) Date of publication and mention of the grant of the patent: **06.11.2019**
(21) Application number: 14815337.2
(22) Date of filing: 17.12.2014
(51) Int. Cl.: F04C 27/00, F04D 29/10, F04D 29/12, H02K 5/10, H02K 5/124, G01N 35/10

(54) **AN ELECTRIC MOTOR WITH A SEALING SYSTEM**
EIN ELEKTROMOTOR MIT EINEM DICHTUNGSSYSTEM
UN MOTEUR ÉLECTRIQUE AVEC UN SYSTÈME D'ÉTANCHÉITÉ

(43) Date of publication of application: 25.10.2017
(73) Proprietor: ABB Schweiz AG, 5400 Baden (CH)
(72) Inventor: BROBERG, Arne, S-722 44 Västerås (SE); SALOMONSSON, Dan, S-722 33 Västerås (SE); RAMSEL, Eric, S-753 37 Uppsala (SE); THULIN, Mats, S-725 97 Västerås (SE); LI, Shanghua, S-723 48 Västerås (SE)
(74) Representative: Savela, Reino Aleksi
(86) International application number: PCT/EP2014/078211
(87) International publication number: WO 2016/095982

(56) References cited:
- CN-U- 203 248 370
- JP-A- H10 148 192
- US-A- 6 123 905
- US-A1- 2013 142 648
- US-A1- 2014 190 568

## Description

### TECHNICAL FIELD

The present invention relates to an electric motor with a sealing system that prevents oil from entering an interior of the motor.

### BACKGROUND ART

An electric motor typically comprises a housing from which a rotating shaft extends through a shaft opening. It is conventionally known to seal a gap between the shaft opening and the shaft against an exterior of the motor to prevent dirt and other unwanted substances from entering an interior of the motor. Such sealing can in normal circumstances be provided e.g. by a single non-contact seal such as a labyrinth seal. However, in more demanding circumstances where the part of the shaft extending to the exterior of the motor is exposed e.g. to oil or other harmful liquids it may be necessary to provide the motor with a special sealing system comprising several seals.

WO2013174400A1 discloses an electric motor comprising a sealing system with a double seal rotating along with the shaft and sealing against an axial face of the motor's end shield. A first sealing element is a labyrinth seal consisting of a circular collar and a circular groove at the axial face of the end shield. A second sealing element is an axial lip seal resting against the axial face of the end shield when the shaft is standing still, and losing the contact with the same when the shaft is rotating. The sealing system according to WO2013174400A1 is constructed particularly for motors mounted in vertical direction, and it assumes that a gear box to which it is attached already comprises an oil seal. According to WO2013174400A1 there is a draining conduit between the gear box and the motor. The double seal of WO2013174400A1 would probably work poorly if the volume within which it is rotating was filled with oil, and particularly so if the motor was mounted in a horizontal direction.

US6376949B1 discloses a fluid drainage interface for isolating a vertically oriented electric motor from a gear box mounted above it. The interface of US6376949B1 is supposed to be used on top of an existing end shield, and also US6376949B1 assumes that a gear box to which the interface is attached already comprises an oil seal. The interface of US6376949B1 comprises an oil seal, but it has not been disclosed how this oil seal is supposed to get lubricated as the eventual leaking oil is directed away from it as effectively as possible (a conventional oil seal requires a contact with oil in order to work properly). Also US6376949B1 discloses a draining conduit between the gear box and the motor.

DE4303946A1 discloses a drainage conduit between two seals at an end shield of an electrical machine. However, as both of the seals are contact-free a leakage will occur across them if they are exposed to a volume filled with oil.

CN203248370U discloses an electric motor for a submersible pump comprising seals with sealing lips between end shields and the motor shaft for preventing a liquid medium from entering the interior of the electric motor through a gap.

US2013142648 and JPH10148192 disclose electric motors with seals and fluid leaking conduits.

US2014190568 discloses a liquid cooled battery with a leakage conduit, which can be closed by a soluble plug.

US6123905 discloses a laboratory pipettor which uses a safety plug, which can change colour upon contact with a liquid.

There remains a desire to improve the existing sealing systems in electric motors such that an end shield comprising a shaft opening can be directly exposed to a volume filled with oil.

### SUMMARY OF THE INVENTION

One object of the invention is to provide an improved sealing system for an electric motor.

These objects are achieved by a device according to appended claim 1 and a method according to appended claim 13.

The invention is based on the realization that by arranging a draining conduit between two lip seals integrated to an end shield of an electric motor instead of e.g. between a gear box seal and a motor seal, the end shield can be brought into direct contact with a volume filled with oil without risking the oil entering an interior of the motor. This brings among other things along the advantage that a gear box can be attached to the motor such that a pinion gear driving the gear box gears is fixedly attached to a motor shaft, whereby a built-in pinion gear within the gear box complicating the design of the same can be omitted. According to a first aspect of the invention there is provided an electric motor according to claim 1 configured to come into contact with a lubricating medium, the electric motor comprising: a housing defining an interior and exterior of the electric motor, the housing comprising a first end shield with a shaft opening, a shaft extending through the shaft opening such that a gap between the shaft opening and the shaft results, and a first seal between the first end shield and the shaft for preventing the lubricating medium from entering the interior of the electric motor through the gap, the first seal comprising at least one sealing lip configured to rest against the shaft or against the first end shield in a dynamic manner, wherein the electric motor further comprises a second seal between the first end shield and the shaft for preventing the lubricating medium from entering the interior of the electric motor through the gap, the second seal comprising at least one sealing lip configured to rest against the shaft or against the first end shield in a dynamic manner, and that the electric motor further comprises a drainage conduit with a drainage opening between the first and second seals, wherein the electric motor further comprises a plug closing the drainage conduit, the plug being configured to indicate a leakage of the lubricating medium.

According to one embodiment of the invention at least one of the first and the second seals, such as each of the first and the second seals, is a radial seal.

According to one embodiment of the invention at least one of the first and the second seals, such as each of the first and the second seals, is configured to prevent leakage of the lubricating medium towards the interior of the electric motor rather than leakage of the same in the opposite direction.

According to one embodiment of the invention at least one of the first and the second seals, such as each of the first and the second seals, is stationary in relation to the first end shield.

According to one embodiment of the invention the second seal is positioned towards the interior of the electric motor in relation to the first seal.

According to one embodiment of the invention the second seal is configured to run without lubrication.

According to one embodiment of the invention the second seal comprises PTFE.

According to one embodiment of the invention the plug comprises material that does one of the following when coming into contact with the lubricating medium: change color, dissolve, expand.

According to one embodiment of the invention the plug comprises transparent material.

According to one embodiment of the invention the lubricating medium is oil.

According to one embodiment of the invention the electric motor further comprises a pinion gear fixedly attached to the shaft.

According to a second aspect of the invention there is provided an actuation unit comprising a gear box attached to an electric motor disclosed hereinbefore.

According to a third aspect of the invention there is provided a method according to claim 13 for preventing a lubricating medium from entering an interior of an electric motor configured to come into contact with the lubricating medium and comprising a housing defining an interior and exterior of the electric motor, the housing comprising a first end shield with a shaft opening, and the electric motor further comprising a shaft extending through the shaft opening such that a gap between the shaft opening and the shaft results, the method comprising the steps of: providing a first seal between the first end shield and the shaft for preventing the lubricating medium from entering the interior of the electric motor through the gap, the first seal comprising at least one sealing lip configured to rest against the shaft or against the first end shield in a dynamic manner; providing a second seal between the first end shield and the shaft for preventing the lubricating medium from entering the interior of the electric motor through the gap, the second seal comprising at least one sealing lip configured to rest against the shaft or against the first end shield in a dynamic manner; and further providing the electric motor with a drainage conduit with a drainage opening between the first and second seals. seals, and providing the electric motor with a plug closing the drainage conduit, the plug being configured to indicate a leakage of the lubricating medium.

### BRIEF DESCRIPTION OF THE DRAWINGS

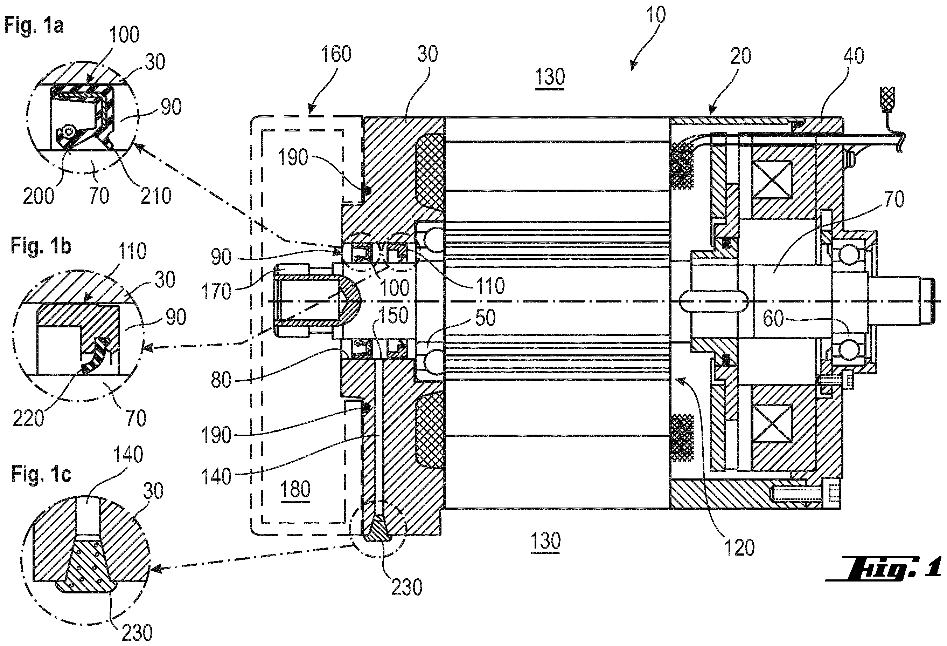

The invention will be explained in greater detail with reference to the accompanying drawing, wherein
- figure 1: shows an electric motor according to one embodiment of the invention.

### DESCRIPTION OF PREFERRED EMBODIMENTS

Referring to figure 1, an electric motor 10 comprises a housing consisting of a cylindrical envelope 20, a first end shield 30 and a second end shield 40. The first and second end shields 30, 40 support respective first and second bearings 50, 60 on which a shaft 70 is rotationally journalled. The first end shield 30 has a shaft opening 80 through which the shaft 70 extends such that a gap 90 between the shaft opening 80 and the shaft 70 is formed. Within the gap 90 there are arranged a first seal 100 and a second seal 110 which together prevent oil from entering an interior 120 of the motor 10 through the gap 90. The interior 120 of the motor 10 can be considered to be defined by the housing and bounded within the gap 90 by the second seal 110, while an exterior 130 of the motor 10 can be considered to be defined by the housing and bounded within the gap 90 by the first seal 100. The motor 10 is provided with a drainage conduit 140 that at a first end comprises a drainage opening 150 into the gap 90 between the first and second seals 100, 110.

Figure 1 further schematically shows a gear box 160 attached to the motor 10. A pinion gear 170 is fixedly attached to a free end of the shaft 70. The pinion gear 170 meshes with, and thereby drives, respective gear box gears within the gear box 160. The gear box 160 defines together with the first end shield 30 an oil volume 180 which is filled with oil for lubricating the pinion gear 170 and the respective gear box gears. At an interface between the gear box 160 and the motor 10 the oil volume 180 is bounded by a static seal 190 closing the interface in a watertight manner. At the gap 90 the oil volume 180 is bounded by the first seal 100. Wherever in this description reference is made to oil, it is to be understood that the oil may be replaced with any suitable lubricating medium.

According to the embodiment of figure 1 the first seal 100 (see in enlarged scale in figure 1a) is a radial oil seal comprising first and second sealing lips 200, 210 made of rubber. The first and second sealing lips 200, 210 are configured to rest against the shaft 70 in a dynamic manner i.e. such that there is a relative movement between the first and second sealing lips 200, 210 and the shaft 70. In the context of this disclosure "resting against the shaft 70" is to be understood to mean that the first and second sealing lips 200, 210 exert a force against the shaft 70 but are not necessarily in contact with the same as there may always be a thin layer of oil between the first and second sealing lips 200, 210 and the shaft 70. Since the first seal 100 is in contact with the oil volume 180 it is possible to use a conventional oil seal that requires lubrication in order to work properly. The first seal 100 may for example be a radial oil seal of type TRE from Trelleborg Sealing Solutions according to standards ISO 6194/0 and DIN 3760, Type AS.

According to the embodiment of figure 1 the second seal 110 (see in enlarged scale in figure 1b) is a radial rotary seal comprising a third sealing lip 220 made of polytetrafluoroethylene (PTFE). Also the third sealing lip 220 is configured to rest against the shaft 70 in a dynamic manner. The second seal 110 is configured to run without lubrication, and it thereby works properly even when there is no leakage across the first seal 100. The second seal 110 may for example be a radial rotary seal of type Turcon® Varilip® PDR from Trelleborg Sealing Solutions. Alternatively, both of the first and the second seals 100, 110 can be radial rotary seals comprising a sealing lip made of PTFE. The first and the second seals 100, 110 can for example be identical.

The second seal 110 may also be a PTFE seal according to the following publication: Proceedings of 18th International Sealing Conference, Stuttgart, Germany, Oct. 8-9, 2014; Gölz et al, "Bidirectional PTFE Lip Seals - Superior to Elastomeric seals?" Alternatively, the second seal 110 may also be a seal according to US20140312571A1. It can also not be excluded that the two aforementioned seal types turn out to show that good performance that they can be used alone, whereby the first seal 100 and the drainage conduit 140 can be omitted. The feasibility of such solution has however not been verified, and the solution is outside of the scope of the present invention.

In case the first seal 100 has a leakage, oil will enter the gap 90 between the first and the second seals 100, 110. However, the second seal 110 will still prevent the oil from entering the interior 120 of the motor 10. The oil will escape from between the first and the second seals 100, 110 through the drainage opening 150 and the drainage conduit 140 by gravity. Although only one drainage conduit 140 is illustrated in figure 1, preferably there is a plurality of drainage conduits 140 in different radial directions in relation to the shaft 70 such that oil can always escape from between the first and the second seals 100, 110 by gravity irrespective of the orientation of the motor 10.

According to the embodiment of figure 1 the drainage conduit 140 is closed at a second end by a plug 230 (see in enlarged scale in figure 1c). The second end of the drainage conduit 140 is conical, and so is the plug 230. The plug 230 is configured to indicate oil leakage by making the plug 230 of a material that expands when it comes into contact with oil. The conical shape will then cause the plug 230 to be pressed out of the drainage conduit 140 and make the oil leakage visible to an operator. A suitable plug material for this purpose is for example ethylene propylene diene monomer (EPDM), which is a synthetic elastomer capable of absorbing oil. Alternatively, the plug 230 can be configured to indicate oil leakage by making it of wax that dissolves when it comes into contact with oil, or by making it of a material that changes color when it comes into contact with oil. Yet alternatively, the plug 230 can be made of a transparent material, or the second end of the drainage conduit 140 can be left unplugged.

The invention is not limited to the embodiments shown above, but the person skilled in the art may modify them in a plurality of ways within the scope of the invention as defined by the claims.

## Claims

1. An electric motor (10) configured to come into contact with a lubricating medium, the electric motor (10) comprising:
- a housing defining an interior (120) and exterior (130) of the electric motor (10), the housing comprising a first end shield (30) with a shaft opening (80),
- a shaft (70) extending through the shaft opening (80) such that a gap (90) between the shaft opening (80) and the shaft (70) results,
- a first seal (100) between the first end shield (30) and the shaft (70) for preventing the lubricating medium from entering the interior (120) of the electric motor (10) through the gap (90), the first seal (100) comprising at least one sealing lip (200, 210) configured to rest against the shaft (70) or against the first end shield (30) in a dynamic manner, and
- a second seal (110) between the first end shield (30) and the shaft (70) for preventing the lubricating medium from entering the interior (120) of the electric motor (10) through the gap (90), the second seal (110) comprising at least one sealing lip (220) configured to rest against the shaft (70) or against the first end shield (30) in a dynamic manner, and that the electric motor (10) further comprises a drainage conduit (140) with a drainage opening (150) between the first and second seals (100, 110),
**characterized in that** the electric motor (10) further comprises a plug (230) closing the drainage conduit (140), the plug (230) being configured to indicate a leakage of the lubricating medium.

2. An electric motor (10) according to claim 1, wherein at least one of the first and the second seals (100, 110), such as each of the first and the second seals (100, 110), is a radial seal.

3. An electric motor (10) according to any of the preceding claims, wherein at least one of the first and the second seals (100, 110), such as each of the first and the second seals (100, 110), is configured to prevent leakage of the lubricating medium towards the interior (120) of the electric motor (10) rather than leakage of the same in the opposite direction.

4. An electric motor (10) according to claim 1, wherein at least one of the first and the second seals (100, 110), such as each of the first and the second seals (100, 110), is stationary in relation to the first end shield (30) .

5. An electric motor (10) according to any of the preceding claims, wherein the second seal (110) is positioned towards the interior (120) of the electric motor (10) in relation to the first seal (100).

6. An electric motor (10) according to claim 5, wherein the second seal (110) is configured to run without lubrication.

7. An electric motor (10) according to any of claims 5 and 6, wherein the second seal (110) comprises PTFE.

8. An electric motor (10) according to any of the preceding claims, wherein the plug (230) comprises material that does one of the following when coming into contact with the lubricating medium: change color, dissolve, expand.

9. An electric motor (10) according to any of the preceding claims, wherein the plug (230) comprises transparent material.

10. An electric motor (10) according to any of the preceding claims, wherein the lubricating medium is oil.

11. An electric motor (10) according to any of the preceding claims further comprising a pinion gear (170) fixedly attached to the shaft (70).

12. An actuation unit comprising a gear box (160) attached to an electric motor (10) according to any of the preceding claims.

13. A method for preventing a lubricating medium from entering an interior (120) of an electric motor (10) configured to come into contact with the lubricating medium and comprising a housing defining an interior (120) and exterior (130) of the electric motor (10), the housing comprising a first end shield (30) with a shaft opening (80), and the electric motor (10) further comprising a shaft (70) extending through the shaft opening (80) such that a gap (90) between the shaft opening (80) and the shaft (70) results, the method comprising the steps of:
- providing a first seal (100) between the first end shield (30) and the shaft (70) for preventing the lubricating medium from entering the interior (120) of the electric motor (10) through the gap (90), the first seal (100) comprising at least one sealing lip (200, 210) configured to rest against the shaft (70) or against the first end shield (30) in a dynamic manner; and
- providing a second seal (110) between the first end shield (30) and the shaft (70) for preventing the lubricating medium from entering the interior (120) of the electric motor (10) through the gap (90), the second seal (110) comprising at least one sealing lip (220) configured to rest against the shaft (70) or against the first end shield (30) in a dynamic manner, and further providing the electric motor (10) with a drainage conduit (140) with a drainage opening (150) between the first and second seals (100, 110);
the method being **characterized by** providing the electric motor (10) with a plug (230) closing the drainage conduit (140), the plug (230) being configured to indicate a leakage of the lubricating medium.

## Patentansprüche

1. Elektromotor (10), der dafür ausgelegt ist, mit einem Schmiermittel in Kontakt zu kommen, wobei der Elektromotor (10) umfasst:
- ein Gehäuse, das ein Inneres (120) und ein Äußeres (130) des Elektromotors (10) definiert, wobei das Gehäuse ein erstes Lagerschild (30) mit einer Wellenöffnung (80) umfasst,
- eine Welle (70), die sich derart durch die Wellenöffnung (80) erstreckt, dass ein Spalt (90) zwischen der Wellenöffnung (80) und der Welle (70) verbleibt,
- eine erste Dichtung (100) zwischen dem ersten Lagerschild (30) und der Welle (70), um zu verhindern, dass das Schmiermittel durch den Spalt (90) in das Innere (120) des Elektromotors (10) gelangt, wobei die erste Dichtung (100) wenigstens eine Dichtlippe (200, 210) umfasst, die dafür ausgelegt ist, in dynamischer Weise an der Welle (70) oder an dem ersten Lagerschild (30) anzuliegen, und
- eine zweite Dichtung (110) zwischen dem ersten Lagerschild (30) und der Welle (70), um zu verhindern, dass das Schmiermittel durch den Spalt (90) in das Innere (120) des Elektromotors (10) gelangt, wobei die zweite Dichtung (110) wenigstens eine Dichtlippe (220) umfasst, die dafür ausgelegt ist, in dynamischer Weise an der Welle (70) oder an dem ersten Lagerschild (30) anzuliegen, und dass der Elektromotor (10) ferner eine Drainageleitung (140) mit einer Drainageöffnung (150) zwischen der ersten und der zweiten Dichtung (100, 110) umfasst,
**dadurch gekennzeichnet, dass** der Elektromotor (10) ferner einen Stopfen (230) umfasst, der die Drainageleitung (140) verschließt, wobei der Stopfen (230) dafür ausgelegt ist, ein Austreten des Schmiermittels anzuzeigen.

2. Elektromotor (10) gemäß Anspruch 1, wobei die erste und/oder die zweite Dichtung (100, 110), etwa sowohl die erste als auch die zweite Dichtung (100, 110), eine Radialdichtung ist.

3. Elektromotor (10) gemäß einem der vorstehenden Ansprüche, wobei die erste und/oder die zweite Dichtung (100, 110), etwa sowohl die erste als auch die zweite Dichtung (100, 110), dafür ausgelegt ist, ein Austreten des Schmiermittels in das Innere (120) des Elektromotors (10) anstatt ein Austreten desselben in umgekehrter Richtung zu verhindern.

4. Elektromotor (10) gemäß Anspruch 1, wobei die erste und/oder die zweite Dichtung (100, 110), etwa sowohl die erste als auch die zweite Dichtung (100, 110), bezogen auf das erste Lagerschild (30) feststehend ist.

5. Elektromotor (10) gemäß einem der vorstehenden Ansprüche, wobei die zweite Dichtung (110) bezogen auf die erste Dichtung (100) zum Inneren (120) des Elektromotors (10) gerichtet ist.

6. Elektromotor (10) gemäß Anspruch 5, wobei die zweite Dichtung (110) dafür ausgelegt ist, ohne Schmierung zu arbeiten.

7. Elektromotor (10) gemäß einem der Ansprüche 5 und 6, wobei die zweite Dichtung (110) PTFE umfasst.

8. Elektromotor (10) gemäß einem der vorstehenden Ansprüche, wobei der Stopfen (230) ein Material umfasst, das bei Kontakt mit dem Schmiermittel in einer der folgenden Weisen reagiert: Ändern der Farbe, Auflösen, Ausdehnen.

9. Elektromotor (10) gemäß einem der vorhergehenden Ansprüche, wobei der Stopfen (230) ein transparentes Material umfasst.

10. Elektromotor (10) gemäß einem der vorstehenden Ansprüche, wobei das Schmiermittel Öl ist.

11. Elektromotor (10) gemäß einem der vorstehenden Ansprüche, ferner ein Ritzel (170) umfassend, das fest an der Welle (70) angebracht ist.

12. Betätigungseinheit, ein Getriebe (160) umfassend, das an einem Elektromotor (10) gemäß einem der vorstehenden Ansprüche angebracht ist.

13. Verfahren zum Verhindern, dass ein Schmiermittel in das Innere (120) eines Elektromotors (10) gelangt, der dafür ausgelegt ist, mit dem Schmiermittel in Kontakt zu kommen und ein Gehäuse umfasst, das ein Inneres (120) und ein Äußeres (130) des Elektromotors (10) definiert, wobei das Gehäuse ein erstes Lagerschild (30) mit einer Wellenöffnung (80) umfasst, und wobei der Elektromotor (10) ferner eine Welle (70) umfasst, die sich derart durch die Wellenöffnung (80) erstreckt, dass ein Spalt (90) zwischen der Wellenöffnung (80) und der Welle (70) verbleibt, wobei das Verfahren die Schritte umfasst:
- Bereitstellen einer ersten Dichtung (100) zwischen dem ersten Lagerschild (30) und der Welle (70), um zu verhindern, dass das Schmiermittel durch den Spalt (90) in das Innere (120) des Elektromotors (10) gelangt, wobei die erste Dichtung (100) wenigstens eine Dichtlippe (200, 210) umfasst, die dafür ausgelegt ist, in dynamischer Weise an der Welle (70) oder an dem ersten Lagerschild (30) anzuliegen; und
- Bereitstellen einer zweiten Dichtung (110) zwischen dem ersten Lagerschild (30) und der Welle (70), um zu verhindern, dass das Schmiermittel durch den Spalt (90) in das Innere (120) des Elektromotors (10) gelangt, wobei die zweite Dichtung (110) wenigstens eine Dichtlippe (220) umfasst, die dafür ausgelegt ist, in dynamischer Weise an der Welle (70) oder an dem ersten Lagerschild (30) anzuliegen, und ferner Versehen des Elektromotors (10) mit einer Drainageleitung (140) mit einer Drainageöffnung (150) zwischen der ersten und der zweiten Dichtung (100, 110);
wobei das Verfahren **dadurch gekennzeichnet ist, dass** der Elektromotor (10) mit einem Stopfen (230) versehen wird, der die Drainageleitung (140) verschließt, wobei der Stopfen (230) dafür ausgelegt ist, ein Austreten des Schmiermittels anzuzeigen.

## Revendications

1. Moteur électrique (10) configuré pour entrer en contact avec un milieu lubrifiant, le moteur électrique (10) comprenant :
- un carter définissant l'intérieur (120) et l'extérieur (130) du moteur électrique (10), le carter comprenant un premier blindage d'extrémité (30) avec une ouverture d'arbre (80),
- un arbre (70) s'étendant à travers l'ouverture d'arbre (80) de telle sorte qu'il en résulte un espace (90) entre l'ouverture d'arbre (80) et l'arbre (70),
- un premier joint (100) entre le premier blindage d'extrémité (30) et l'arbre (70) pour empêcher le milieu lubrifiant d'entrer à l'intérieur (120) du moteur électrique (10) à travers l'espace (90), le premier joint (100) comprenant au moins une lèvre d'étanchéité (200, 210) configurée pour reposer de manière dynamique sur l'arbre (70) ou sur le premier blindage d'extrémité (30), et
- un deuxième joint (110) entre le premier blindage d'extrémité (30) et l'arbre (70) pour empêcher le milieu lubrifiant d'entrer à l'intérieur (120) du moteur électrique (10) à travers l'espace (90), le deuxième joint (110) comprenant au moins une lèvre d'étanchéité (220) configurée pour reposer de manière dynamique sur l'arbre (70) ou sur le premier blindage d'extrémité (30), et ce que le moteur électrique (10) comprend en outre un conduit de drainage (140) avec une ouverture de drainage (150) entre les premier et deuxième joints (100, 110),
**caractérisé en ce que** le moteur électrique (10) comprend en outre un bouchon (230) fermant le conduit de drainage (140), le bouchon (230) étant configuré pour indiquer une fuite du milieu lubrifiant.

2. Moteur électrique (10) selon la revendication 1, dans lequel au moins l'un des premier et deuxième joints (100, 110), comme chacun des premier et deuxième joints (100, 110), est un joint radial.

3. Moteur électrique (10) selon l'une quelconque des revendications précédentes, dans lequel au moins l'un des premier et deuxième joints (100, 110), comme chacun des premier et deuxième joints (100, 110), est configuré pour empêcher une fuite du milieu lubrifiant vers l'intérieur (120) du moteur électrique (10) plutôt qu'une fuite de celui-ci dans la direction opposée.

4. Moteur électrique (10) selon la revendication 1, dans lequel au moins l'un des premier et deuxième joints (100, 110), comme chacun des premier et deuxième joints (100, 110), est stationnaire par rapport au premier blindage d'extrémité (30).

5. Moteur électrique (10) selon l'une quelconque des revendications précédentes, dans lequel le deuxième joint (110) est positionné vers l'intérieur (120) du moteur électrique (10) par rapport au premier joint (100).

6. Moteur électrique (10) selon la revendication 5, dans lequel le deuxième joint (110) est configuré pour fonctionner sans lubrification.

7. Moteur électrique (10) selon l'une quelconque des revendications 5 et 6, dans lequel le deuxième joint (110) comprend du PTFE.

8. Moteur électrique (10) selon l'une quelconque des revendications précédentes, dans lequel le bouchon (230) comprend un matériau qui ne présente aucun des effets suivants lorsqu'il entre en contact avec le milieu lubrifiant : changer de couleur, se dissoudre, se dilater.

9. Moteur électrique (10) selon l'une quelconque des revendications précédentes, dans lequel le bouchon (230) comprend un matériau transparent.

10. Moteur électrique (10) selon l'une quelconque des revendications précédentes, dans lequel le milieu lubrifiant est de l'huile.

11. Moteur électrique (10) selon l'une quelconque des revendications précédentes, comprenant en outre un engrenage à pignons (170) rattaché solidement à l'arbre (70) .

12. Unité d'actionnement comprenant une boîte de vitesse (160) rattachée à un moteur électrique (10) selon l'une quelconque des revendications précédentes.

13. Procédé permettant d'empêcher un milieu lubrifiant d'entrer à l'intérieur (120) d'un moteur électrique (10) configuré pour entrer en contact avec le milieu lubrifiant et comprenant un carter définissant l'intérieur (120) et l'extérieur (130) du moteur électrique (10), le carter comprenant un premier blindage d'extrémité (30) avec une ouverture d'arbre (80), et le moteur électrique (10) comprenant en outre un arbre (70) s'étendant à travers l'ouverture d'arbre (80) de sorte qu'il en résulte un espace (90) entre l'ouverture d'arbre (80) et l'arbre (70), le procédé comprenant les étapes consistant à :
- prévoir un premier joint (100) entre le premier blindage d'extrémité (30) et l'arbre (70) pour empêcher le milieu lubrifiant d'entrer à l'intérieur (120) du moteur électrique (10) à travers l'espace (90), le premier joint (100) comprenant au moins une lèvre d'étanchéité (200, 210) configurée pour reposer de manière dynamique sur l'arbre (70) ou sur le premier blindage d'extrémité (30) ; et
- prévoir un deuxième joint (110) entre le premier blindage d'extrémité (30) et l'arbre (70) pour empêcher le milieu lubrifiant d'entrer à l'intérieur (120) du moteur électrique (10) à travers l'espace (90), le deuxième joint (110) comprenant au moins une lèvre d'étanchéité (220) configurée pour reposer de manière dynamique sur l'arbre (70) ou sur le premier blindage d'extrémité (30), et en outre munir le moteur électrique (10) d'un conduit de drainage (140) avec une ouverture de drainage (150) entre les premier et deuxième joints (100, 110) ;
le procédé étant **caractérisé par** le fait de munir le moteur électrique (10) d'un bouchon (230) fermant le conduit de drainage (140), le bouchon (230) étant configuré pour indiquer une fuite du milieu lubrifiant.
